# DEMANDE DE BREVET EUROPEEN

(11) **EP 1 295 794 A1**
(43) Date de publication de la demande: **26.03.2003**
(21) Numéro de dépôt: 02356168.1
(22) Date de dépôt: 30.08.2002
(51) Int. Cl.: B65B 51/22, B29C 65/16

(54) **Procédé de fixation d' un film étirable sur au moins un conteneur, ainsi que le conteneur ainsi obtenu**

(30) Priorité: 31.08.2001 FR 0111347
(71) Demandeur: DECOMATIC S.A., F-38290 La Verpillière (FR)
(72) Inventeur: Allegre, Jean Luc, 38460 Chozeau (FR)
(74) Mandataire: Schouller, Jean-Philippe

(57) **Abrégé**

Selon ce procédé :
- on place le film (10), réalisé en polyéthylène basse densité, dans la position précise qu'il doit adopter, par rapport au contenant (2), qui possède un revêtement extérieur réalisé en polyéthylène haute densité ; puis
- on assujettit ce film (10) par rapport au contenant (2), par une phase de soudage au laser, notamment au moyen d'un faisceau laser à dioxyde de carbone (14).

Ceci permet de fixer de façon fiable le film sur le contenant, sans nuire à l'esthétique globale de ce dernier.

## Description

La présente invention concerne un procédé de fixation d'un film étirable sur au moins un contenant, ainsi qu'un contenant, pourvu d'un film étirable, réalisé selon ce procédé.

Il existe plusieurs modes connus d'étiquetage des contenants. Ainsi, un premier de ces modes consiste à coller une étiquette réalisée en papier, sur ce contenant.

Selon une solution alternative, on utilise une étiquette, en forme de manchon, réalisée en polychlorure de vinyl (PVC). Un tel manchon thermorétractable est susceptible d'être fixé, par adhérence, sur les parois latérales du contenant.

Le format du film est calculé de façon à obtenir un serrage sur le contenant.

Un troisième mode, visé par l'invention, fait appel à un film étirable en polyéthylène basse densité, qui se trouve maintenu au contenant par élasticité après étirement. Ce contenant possède un revêtement extérieur en polyéthylène haute densité.

De façon classique, ce film est manchonné, automatiquement ou manuellement, de la façon suivante. Il est tout d'abord étiré, de manière à pouvoir être glissé le long des parois latérales du contenant, jusqu'à la position précise qu'il doit adopter. Puis, on supprime l'action manuelle ou mécanique permettant d'étirer ce film, de sorte que ce dernier se trouve plaqué, par élasticité, contre les parois latérales du contenant.

Cette solution connue présente cependant certains inconvénients. En effet, le film étirable en polyéthylène basse densité n'est pas rendu solidaire du contenant de façon permanente. De la sorte, ce film est à même d'être ôté du contenant. Ceci peut induire une utilisation erronée du produit reçu dans le contenant, susceptible de se révéler dangereuse, en particulier si ce contenant renferme des denrées toxiques.

L'invention vise à remédier à l'inconvénient évoqué ci-dessus. A cet effet, elle se propose de mettre en oeuvre un procédé permettant de fixer un film étirable sur un contenant de façon fiable, sans pour autant dégrader l'aspect esthétique global de ce contenant.

A cet effet, elle a pour objet un procédé de fixation d'un film étirable réalisé en polyéthylène basse densité, sur au moins un contenant possédant un revêtement extérieur réalisé en polyéthylène haute densité, caractérisé en ce qu'il comprend les étapes suivantes :
- on place le film étirable, dans la position précise qu'il doit adopter, par rapport au ou à chaque contenant, et
- on assujettit ce film au ou à chaque contenant, par une phase de soudage au laser.

Au sens de l'invention, le film est réalisé en polyéthylène basse densité (PEBD), à savoir qu'il peut être intégralement constitué en PEBD, ou qu'il peut être composé majoritairement de PEBD. Dans ce cas, il peut comprendre une faible fraction d'un autre composant, tel que de l'EVA ou du linéaire LLDPE.

Par ailleurs, le contenant de l'invention peut être intégralement constitué de polyéthylène haute densité (PEHD). Il peut également comprendre uniquement un revêtement extérieur en PEHD, recouvrant un autre composant, tel du polyamide.

Selon une autre caractéristique de l'invention, on place le film étirable dans la position précise qu'il doit adopter, en le plaquant contre une paroi latérale du contenant.

Cette opération de plaquage peut être réalisée, de façon classique, en tirant parti de l'élasticité du film étirable. Elle peut également être complétée par l'utilisation d'un système mécanique annexe de plaquage, ou bien en faisant appel à de l'air comprimé.

Selon une autre caractéristique de l'invention, le film étirable est un manchon, et on dispose le ou chaque contenant dans le volume intérieur de ce manchon, avant l'étape d'assujettissement.

Selon une autre caractéristique avantageuse de l'invention, la phase de soudage est réalisée par l'intermédiaire d'un faisceau laser à dioxyde de carbone.

En effet, étant donné que le polyéthylène est opaque à la longueur d'ondes de ce type de laser, ce matériau est susceptible d'en absorber le rayonnement.

L'invention a également pour objet un contenant possédant un revêtement extérieur réalisé en polyéthylène haute densité, pourvu d'un film étirable réalisé en polyéthylène basse densité, caractérisé en ce que ce contenant est obtenu selon le procédé tel que défini ci-dessus.

Selon d'autres caractéristiques de l'invention :
- le film est un manchon, et le contenant est reçu dans le volume intérieur de ce manchon ;
- le contenant se trouve solidarisé à au moins un autre contenant, également reçu dans le volume intérieur du manchon.

L'invention va être décrite ci-après, en référence aux dessins annexés, donnés uniquement à titre d'exemples non limitatifs, dans lesquels :
- les figures 1 à 3 sont des vues schématiques illustrant trois phases successives de la mise en oeuvre du procédé de l'invention, selon une première variante de réalisation de celle-ci ; et
- la figure 4 est une vue analogue à la figure 3, illustrant un second mode de réalisation de l'invention.

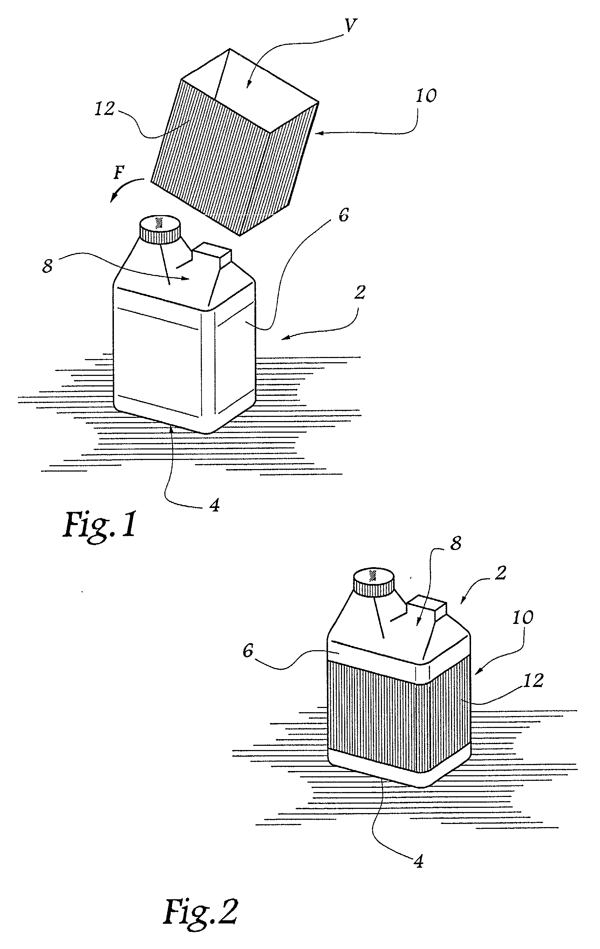

Les figures 1 à 3 illustrent un contenant, qui est un bidon désigné dans son ensemble par la référence 2.

Ce bidon, qui possède un revêtement extérieur en polyéthylène haute densité, présente une épaisseur comprise, par exemple, entre 0,5 et 5 mm. Il est pourvu de façon classique d'un fond 4, à partir duquel s'étendent des parois latérales 6. Il est par ailleurs prévu une paroi supérieure 8, qui est creusée d'une ouverture non représentée, pourvue d'un bouchon, permettant l'accès au volume intérieur du bidon 2.

Ces figures 1 à 3 illustrent également un film 10 réalisé en polyéthylène basse densité. Ce film, qui possède par exemple une épaisseur d'environ 80 micromètres, est étirable en ce sens qu'il possède un certain caractère élastique. Il affecte la forme d'un manchon cylindrique, possédant une paroi latérale 12 ouverte à ses deux extrémités.

Ce manchon est obtenu de façon connue, à partir d'un film le plus souvent imprimé. Ce film est replié sur lui-même, puis soudé pour constituer une gaine qui sera, soit découpée au format souhaité, soit livrée en bobines éventuellement prédécoupées.

Ce manchon est susceptible de posséder des volets repositionnables ou détachables qui ne sont pas représentés. Les différents types de manchons sont adaptés à leur usage, à savoir notamment l'étiquetage, le groupage ou la fermeture.

Les deux premières étapes du procédé de l'invention, illustrées aux figures 1 et 2, sont de type classique. Elles consistent tout d'abord à étirer radialement le manchon 10, par tout moyen approprié, puis de le rapprocher axialement du bidon 2, selon la flèche F. De la sorte, ce dernier se trouve reçu dans le volume intérieur V de ce manchon.

Comme l'illustre la figure 2, le manchon est ensuite placé dans la position précise qu'il doit adopter par rapport au contenant. A cet effet, on tire parti de l'élasticité de ce manchon, qui vient se plaquer, par sa face intérieure, contre les parois latérales 6 du bidon 2. Il est également envisageable de faire appel à un système mécanique annexe, non représenté sur cette figure 2.

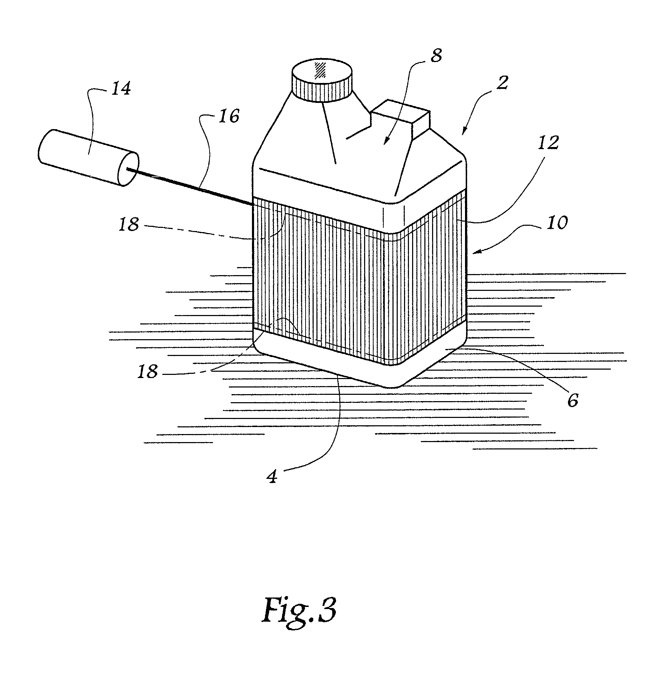

La figure 3 illustre l'étape de fixation, proprement dite, du manchon 10 sur le bidon 2.

Pour ce faire, on utilise un laser 14, par exemple à dioxyde de carbone, qui est susceptible de générer un faisceau d'irradiation 16. On dirige ce faisceau à l'endroit souhaité pour réaliser la solidarisation du manchon sur le contenant. On forme ainsi des lignes de soudure ou des points de soudure discontinus, voire des motifs ou des inscriptions.

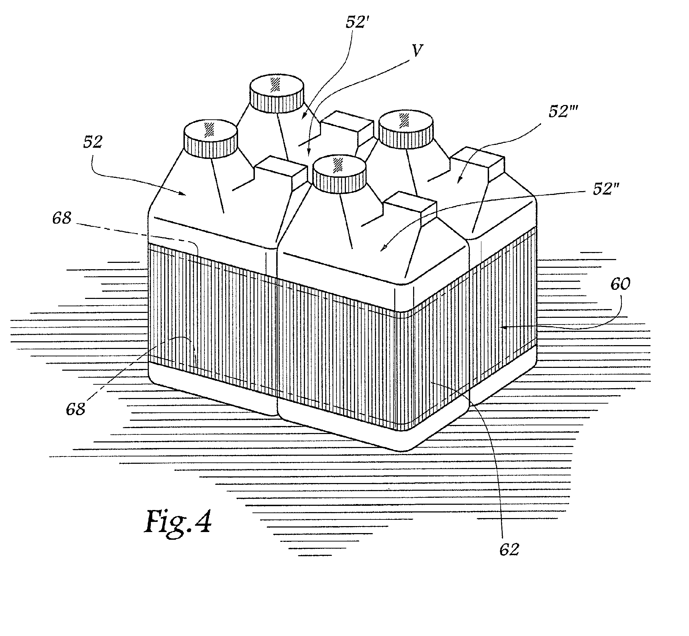

La figure 4 illustre une variante de réalisation de l'invention. Sur cette figure, les éléments analogues à ceux des figures 1 à 3 sont affectés des mêmes numéros de référence, augmentés de 50.

Dans cette variante, quatre bidons analogues 52, 52', 52'' et 52''' sont reçus dans le volume intérieur V' du manchon 60. Ce dernier possède ainsi un périmètre nettement supérieur à celui du manchon 10, décrit en référence aux figures 1 à 3. La solidarisation mutuelle de ce manchon 60 et de ces bidons 52 est réalisée de façon analogue à ce qui a été décrit précédemment.

L'invention permet de réaliser les objectifs précédemment mentionnés.

En effet, elle assure une fixation particulièrement fiable du film étirable sur le contenant, contre lequel ce film prend appui.

De la sorte, ce film ne peut pas être ôté par inadvertance du bidon, alors que des traces visibles subsisteront nécessairement sur les parois du bidon, en cas de désolidarisation par malveillance.

Ceci permet ainsi de s'affranchir de tout risque d'utilisation erronée des produits, notamment toxiques, reçus dans le contenant.

Par ailleurs, la fixation assurée par l'invention est remarquable en termes esthétiques. En effet, elle n'est pas préjudiciable à l'aspect extérieur global du contenant, ce qui est avantageux par rapport à d'autres modes de fixation, notamment par collage.

## Revendications

1. Procédé de fixation d'un film étirable (10 ; 60), réalisé en polyéthylène basse densité, sur au moins un contenant (2 ; 52), possédant un revêtement extérieur réalisé en polyéthylène haute densité, **caractérisé en ce qu'**il comprend les étapes suivantes :
- on place (figure 2) le film étirable (10 ; 60) dans la position précise qu'il doit adopter, par rapport au ou à chaque contenant (2 ; 52) ; et
- on assujettit (figure 3) le film étirable au ou à chaque contenant, par l'intermédiaire d'une phase de soudage au laser (14).

2. Procédé de fixation selon la revendication 1, **caractérisé en ce qu'**on place le film étirable (10 ; 60) dans la position précise qu'il doit adopter, en le plaquant contre une paroi latérale (12 ; 62) du contenant.

3. Procédé de fixation selon la revendication 1 ou 2, **caractérisé en ce que** le film est un manchon (10 ; 60), et **en ce qu'**on dispose le ou chaque contenant (2 ; 52) dans le volume intérieur (V ; V') dudit manchon, avant l'étape d'assujettissement.

4. Procédé de fixation selon l'une quelconque des revendications 1 à 3, **caractérisé en ce que** ladite phase de soudage est réalisée par l'intermédiaire d'un faisceau laser à dioxyde de carbone (14).

5. Contenant (2 ; 52) possédant un revêtement extérieur réalisé en polyéthylène haute densité, ce contenant étant pourvu d'un film étirable (10 ; 60) réalisé en polyéthylène basse densité, **caractérisé en ce que** ce contenant est obtenu selon le procédé conforme à l'une quelconque des revendications précédentes.

6. Contenant selon la revendication 5, **caractérisé en ce que** le film est un manchon (10 ; 60), et **en ce que** le contenant est reçu dans le volume intérieur (V ; V') de ce manchon.

7. Contenant selon la revendication 6, **caractérisé en ce qu'**il se trouve solidarisé à au moins un autre contenant (52', 52'', 52'''), également reçu dans le volume intérieur (V') du manchon (60).
